(19) Europäisches Patentamt
European Patent Office
Office européen des brevets

(11) Publication number: **0 212 575 B1**

(12) # EUROPEAN PATENT SPECIFICATION

(45) Date of publication of patent specification: **15.05.91**

(51) Int. Cl.$^5$: **C08L 23/08**, C08L 33/04, C08K 3/22

(21) Application number: **86111240.7**

(22) Date of filing: **14.08.86**

(54) **Halogen-free flame resistant thermoplastic compostion.**

(30) Priority: **16.08.85 US 766355**

(43) Date of publication of application: **04.03.87 Bulletin 87/10**

(45) Publication of the grant of the patent: **15.05.91 Bulletin 91/20**

(84) Designated Contracting States: **DE FR GB IT NL**

(56) References cited:
**EP-A- 0 004 017**
**EP-A- 0 121 594**
**GB-A- 2 083 480**
**EP-A- 0 054 424**
**EP-A- 0 158 040**
**GB-A- 2 107 720**

(73) Proprietor: **E.I. DU PONT DE NEMOURS AND COMPANY**
**1007 Market Street**
**Wilmington Delaware 19898(US)**

(72) Inventor: **Vaidya, Upen Ishwarlal**
**14 Edgebrook Way**
**Newark, DE 19702(US)**

(74) Representative: **von Kreisler, Alek, Dipl.-Chem. et al**
**Deichmannhaus am Hauptbahnhof**
**W-5000 Köln 1(DE)**

EP 0 212 575 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### BACKGROUND OF THE INVENTION

This invention is directed to halogen-free, flame retardant, low smoke generating, dimensionally stable, thermoplastic compositions that are especially useful for wire and cable coverings.

Polyvinyl chloride containing compositions and other halogenated polymer compositions when mixed with antioxidants, carbon black and other additives result in excellent wire and cable jacketing. Due to the presence of halogen in the polymers they possess some flame retardant capability. However, for some time manufacturers of wire and cable have been concerned both with the flammability of the polymeric coverings and with the emission of toxic and corrosive gases when the polymeric coverings burn. There is a growing awareness of the secondary effects of a fire and in many cases the cost of the secondary damage far exceeds the damage done to the cable. This secondary damage is often caused by the corrosive effects of the gaseous products of the fire. For example, when polyvinyl chloride is used as the base polymer for cable jacketing, toxic and corrosive gases are emitted containing hydrochloric acid and the damaging effects of such gases to the installation can be greater than the fire damage itself.

A number of halogen-free polymer mixtures containing flame retardants have been suggested for wire and cable covering. Usually when elastomers are used in the formulation, the elastomer must be cured to obtain satisfactory physical properties, such as adequate tensile strength and elongation. However, such compositions are thermoset and the scrap material cannot be reused, making such applications for the manufacture of wire covering rather expensive. At the same time, even with the addition of inorganic fillers that function as flame retardants, the wire and cable covering must be flexible, not rigid, and exhibit satisfactory physical properties normally associated with elastomers even at high temperatures.

The present invention provides flame retardant, low smoke generating thermoplastic wire and cable coverings that exhibit excellent physical properties of tensile strength and elongation even at high temperatures. Further, the thermoplastic compositions of the present invention have a high limiting oxygen index thus indicating that these compositions possess good flame retardant properties. Also, the thermoplastic compositions have excellent dimensional stability at elevated temperatures, as indicated by the low values obtained during hot deformation and heat deformation tests on the composition. Furthermore, the thermoplastic compositions show a very low maximum smoke density. All these characteristics make the thermoplastic compositions especially suitable for wire and cable coverings.

### SUMMARY OF THE INVENTION

The present invention is directed to a halogen-free flame retardant, low smoke generating thermoplastic composition that is especially useful for wire and cable coverings comprising:

(a) 50-70 weight percent of an ethylene acrylate copolymer which contains 30-60 weight percent ethylene,

(b) 10-30 weight percent of a linear polyolefin of ethylene or propylene,

(c) 5-25 weight percent of a polymer having a melting point not greater than about 180 °C selected from the group consisting of a multi-block copolyetherester elastomer, or an ethylene vinyl ester copolymer of a monocarboxylic alkanoic acid containing 2-4 carbon atoms, said copolymer containing 10-30 weight percent vinyl ester, or mixtures thereof, and

(d) 100-175 parts per 100 parts total polymer of a hydrated inorganic metal salt flame retardant.

### DESCRIPTION OF PREFERRED EMBODIMENTS

The amount of ethylene acrylate copolymer that is present in the thermoplastic composition is from 50-70 weight percent, preferably about 55-65 weight percent, the amounts being based upon the total weight of the polymer in the composition. If one uses less than 50 weight percent ethylene acrylate copolymer then the flame retardant properties and the low smoke generating capability are adversely affected, and if more than 70 weight percent is present then the physical properties and resistance to deformation at elevated temperatures are not satisfactory. The ethylene acrylate copolymers contain 30-60 weight percent ethylene in the copolymer, usually 38-45 weight percent ethylene. Such ethylene acrylate copolymers are ethylene alkyl acrylates or ethylene alkyl methacrylates wherein the alkyl group contains 1-6 carbon atoms. Representative ethylene acrylate copolymers that can be used in this invention include ethylene methyl

acrylate, ethylene ethyl acrylate, ethylene propyl acrylate, ethylene butyl acrylate and ethylene hexyl acrylate, ethylene methyl methacrylate, ethylene ethyl methacrylate and ethylene propyl methacrylate or mixtures thereof. Preferably, the ethylene acrylate copolymer is ethylene methyl acrylate or ethylene ethyl acrylate.

Optionally, the ethylene acrylate copolymers can contain a third monomer that contains functional groups that are cure-sites. These third monomers are present in rather small amounts, e.g., about 0.1-10 weight percent of the copolymer. The presence of the third monomer in the copolymer containing a cure-site is optional because the ethylene acrylate copolymers used in the present invention are not cured. Such third monomers include monoalkyl or monoalkoxy alkyl esters of 1,4-butenedioic acid, wherein the alkyl group usually contains 1-6 carbon atoms, especially ethyl hydrogen maleate, 2-ethylhexyl hydrogen maleate or monomethoxyethyl. Carbon monoxide is also a suitable cure-site monomer. Such copolymers, if not commercially available, can be made by conventional and well known methods.

The thermoplastic composition contains 10-30 weight percent of a linear polyolefin resin, said amounts being based upon the total polymer in the composition. The linear polyolefin resin can be polyethylene, either low or high density, or polypropylene. The polyethylene and polypropylene can contain up to about 10 weight percent of another olefin having up to 10 carbon atoms, preferably 4-8 carbon atoms, such as 1-octene. Usually, the melt index of the polyolefin is from 0.1-20. Preferably, polyethylene is used as the linear polyolefin, and especially high density polyethylene because it is compatible with the ethylene-containing polymer and it provides good dimensional stability for the thermoplastic composition at elevated temperatures.

The thermoplastic composition contains 5-25 weight percent, preferably 10-20 weight percent, of a polymer having a melting point not greater than 180°C selected from the group consisting of a multi-block copolyetherester elastomer or an ethylene vinyl ester copolymer of a monocarboxylic alkanoic acid containing 2-4 carbon atoms wherein said copolymer contains 10-30 weight percent vinyl ester or mixtures thereof. The amounts of polymer given above are based upon the total amount of polymer in the composition. If the melting point of the copolymers is greater than 180°C, then when the thermoplastic composition is prepared by fluxing water of hydration is lost from the hydrated inorganic metal salt and this adversely affects the flame retardant capability of the hydrated salt and, consequently, the thermoplastic composition.

Representative ethylene vinyl ester copolymers that can be used as a component of the composition of this invention and having melting points no greater than 180°C include ethylene vinyl acetate, ethylene vinyl propionate, ethylene vinyl butyrate. Preferably, ethylene vinyl acetate copolymer having a vinyl acetate content of 10-30 weight percent is used.

Alternatively, the composition can contain 5-25 weight percent of a multi-block copolyetherester elastomer having a melting point not greater than 180°C either alone or in admixture with the ethylene vinyl ester copolymers.

The copolyetherester elastomers are well known and consist essentially of repeating blocks of long-chain ester units having the formula:

$$-OGO-\overset{O}{\overset{\|}{C}}R\overset{O}{\overset{\|}{C}}-, \qquad (I)$$

and repeating blocks of short-chain ester units having the formula:

$$-ODO-\overset{O}{\overset{\|}{C}}R\overset{O}{\overset{\|}{C}}- \qquad (II)$$

where G is a divalent radical remaining after the removal of terminal hydroxyl groups from a poly(alkylene oxide) glycol having a molecular weight of from 400-4000, R is a divalent radical remaining after the removal of carboxyl groups from a dicarboxylic acid having a molecular weight of less than 300, and D is a divalent radical remaining after the removal of hydroxyl groups from a diol having a molecular weight less than 250, the resulting copolyetherester elastomers having a melting point not greater than 180°C.

The thermoplastic copolyetherester elastomers useful in this invention consist essentially of repeating

long-chain ester units and short-chain ester units, as previously described hereinabove. The term "long-chain ester units" as applied to units in a polymer chain of the copolyetherester refers to the reaction product of a long-chain glycol with a dicarboxylic acid. Such "long-chain ester units", which are a repeating unit in the copolyetheresters, correspond to formula (I) above. The long-chain glycols are polymeric glycols having terminal (or as nearly terminal as possible) hydroxy groups and a number average molecular weight from about 400-4000. The long-chain glycols used to prepare the copolyetheresters are poly(alkylene oxide) glycols having a carbon-to-oxygen atomic ratio of about 2.0-4.3. Representative long-chain glycols are poly-(ethylene oxide)glycol, poly(1,2- and 1,3-propylene oxide)glycol, poly(tetramethylene oxide)glycol, random or block copolymers of ethylene oxide and 1,2-propylene oxide, and random or block copolymers of tetrahydrofuran with minor amounts of a second monomer such as ethylene oxide.

The term "short-chain ester units" as applied to units in a polymer chain of the copolyetherester refers to units made by reacting a low molecular weight diol having a molecular weight below about 250 with an aromatic dicarboxylic acid having a molecular weight below about 300, to form ester units represented by formula (II) above.

The term "low molecular weight diols" as used herein should be construed to include equivalent ester-forming derivatives, provided, however, that the molecular weight requirement pertains to the diol only and not to its derivatives.

Aliphatic or cycloaliphatic diols with 2-15 carbon atoms are preferred, such as ethylene, propylene, tetramethylene, pentamethylene, 2,2-dimethyltrimethylene, hexamethylene, and decamethylene glycols, dihydroxy cyclohexane and cyclohexane dimethanol.

The term "dicarboxylic acids" as used herein, includes equivalents of dicarboxylic acids having two functional carboxyl groups which perform substantially like dicarboxylic acids in reaction with glycols and diols in forming copolyetherester polymers. These equivalents include esters and ester-forming derivatives, such as acid anhydrides. The molecular weight requirement pertains to the act and not to its equivalent ester or ester-forming derivative.

Among the aromatic dicarboxylic acids for preparing the copolyetherester polymers containing 8-16 carbon atoms are preferred, particularly the phenylene dicarboxylic acids, i.e., phthalic, terephthalic and isophthalic acids and their dimethyl esters and mixtures thereof.

Preferred copolyetheresters for use in the compositions of this invention are those prepared from dimethyl terephthalate, dimethyl isophthalate, 1,4-butanediol or ethylene glycol and poly(tetramethylene oxide)glycol having a number average molecular weight of about 600-2000 or ethylene oxide-capped poly-(propylene oxide)glycol having a number average molecular weight of about 1500-2800 and an ethylene oxide content of 15-35% by weight. Multi-block copolyetherester elastomers containing poly(butylene terephthalate) short-chain ester units, the balance being long chain ester units of poly(tetramethylene ether) glycol terephthalate are especially preferred. If the melting point of the resulting copolyetherester elastomer is too high it can be readily lowered by employing during its manufacture either mixed dicarboxylic acids or mixed diols, as is well known in the art. For example, up to about 30 mole percent of the dimethyl terephthalate in these polymers can be replaced by either dimethyl phthalate or dimethyl isophthalate, or mixed diols such as butanediol and hexamethylene diol can be used to make a copolyetherester having a lower melting point. Such elastomers are available commercially or can be prepared by known procedures.

The dicarboxylic acids or their derivatives and the polymeric glycol are incorporated into the copolyetherester in the same molar proportions as are present in the reaction mixture. The amount of low molecular weight diol actually incorporated corresponds to the difference between the moles of diacid and polymeric glycol present in the reaction mixture. When mixtures of low molecular weight diols are employed, the amounts of each diol incorporated is largely a function of the amounts of the diols present, their boiling points, and relative reactivities. The total amount of diol incorporated is still the difference between moles of diacid and polymeric glycol.

The copolyetheresters used in the present invention are made by a conventional ester interchange reaction. A preferred procedure involves heating a mixture of the dimethyl esters of terephthalic acid and isophthalic acid with a long-chain glycol and a molar excess of 1,4-butanediol in the presence of a catalyst at about 150-260 °C and a pressure of 0.05 to 0.5 MPa, usually ambient pressure, while distilling off methanol formed by the ester interchange. Depending on temperature, catalyst, glycol excess and equipment, this reaction can be completed within a few minutes, e.g., about two minutes, to a few hours, e.g. about two hours. This procedure results in the preparation of a low molecular weight prepolymer which can be carried to a high molecular weight copolyetherester by distillation of the excess of short-chain diol. The second process stage is known as "polycondensation".

Additional ester interchange occurs during this polycondensation which serves to increase the molecular weight and to randomize the arrangement of the copolyetherester units.

Usually, such copolyetherester elastomers are the reaction product of an ester interchange reaction between an aromatic dicarboxylic acid, e.g., phthalic acid, isophthalic acid or terephthalic acid or mixtures thereof with an aliphatic diol having 4-8 carbon atoms, e.g., 1,4-butanediol and a poly(alkylene oxide) glycol having a molecular weight of from 400-2000.

When the thermoplastic composition contains a multi-block copclyetherester elastomer having a melting point not greater than 180 °C, it is preferable to incorporate in the composition a basic metal salt to prevent reaction between the copolyetherester and the ethylene acrylate copolymer. Various basic metal salts that can be used include lead phosphite, lead phthalate, tribasic lead maleate, magnesium hydroxide and magnesium carbonate. Lead salts are preferred because they do not cause scorching of the elastomer and dibasic lead phosphite is most preferred.

The thermoplastic compositions contain 100-175 preferably 130-150, parts per 100 parts total polymer of a flame retardant, hydrated inorganic metal salt. Those metal salts that contain the greatest amount of water are preferred. Preferably, the flame retardant is a hydrated metal salt of aluminum or magnesium. Representative hydrated metal salts that can be used in the present invention include aluminum hydroxide, magnesium hydroxide, basic magnesium carbonate, magnesium silicate and aluminum silicate. Aluminum hydroxide is preferred because it contains large amounts of water. Usually the hydrated metal salts have a particle size of from about 0.5-20 microns.

The flame retardant, thermoplastic compositions of this invention can contain other additives conventionally incorporated in the polymers, such as antioxidants including aromatic diamines such as N,N'-diphenylethylenediamine and octylated diphenylamine phenols such as 4-hydroxymethyl-2,6-di-t-butyl phenol, 2,6-di-t-butyl-α-methoxy-p-cresol and 4,4'-butylidenebis(6-t-butyl-3-methylphenol) and conventional processing aids, e.g., microcrystalline waxes, organic alkyl acid phosphites, fatty alcohol phosphates, stearic acid and octadecyl amine. Fillers such as carbon black and pigments such as titanium dioxide can also be added to the composition.

The thermoplastic compositions are prepared by mixing the ingredients in a mixer such as an internal mixer, a rubber mill or an extruder heated to about 125-180 °C which is sufficient to melt blend or flux the polymers with the inorganic materials. The ingredients can all be added at about the same time, but it is preferred to add the polymers to the other ingredients if mixing is performed in an internal mixer such as a Banbury.

The thermoplastic compositions of the present invention are especially useful for coating wire and cable, including transit wire, telephone cable and the like. Due to the fact that the thermoplastic compositions described herein are halogen-free they do not give off toxic fumes, such as is the case with polyvinyl chloride-containing compositions, when burned. At the same time, the polymer compositions of this invention can contain a large amount of an inorganic metal salt flame retardant and still exhibit excellent tensile strength, elongation at break, oil resistance, dimensional stability at elevated temperatures and generate a minimum of smoke when burned.

The following examples illustrate the invention wherein all amounts given are in parts by weight unless otherwise indicated.

Example 1

A sample of 2100g aluminum hydroxide (1-2 microns), 70g dibasic lead phosphite, 14g Naugard® 445 antioxidant (substituted diphenyl amine), 14g Gafac RL-210 (organic alkyl acid phosphate) and 14g microcrystalline wax (m.p. 82 °C) were mixed and added to a water-cooled Banbury mixer followed by addition of 910 g of an ethylene acrylate copolymer containing 40 weight percent ethylene units, 56 weight percent methyl acrylate units and 4.2 weight percent ethyl hydrogen maleate units, 210g of a linear high density polyethylene (density 0.96, melt index 2.8) and 280g of a copolyetherester elastomer containing 27.4 weight percent units derived from dimethylterephthalate, 8.8 weight percent units derived from dimethylisophthalate, 19.5 weight percent units derived from 1,4-butanediol and 44.7 weight percent units derived from polytetramethylene ether glycol having a melting point of about 168 °C. The resulting thermoplastic composition contained, based on the total weight of polymer in the composition, 65 weight percent ethylene acrylate copolymer, 15 weight percent polyethylene, 20 weight percent copolyetherester elastomer, 150 parts per 100 parts total polymer aluminum hydroxide and 5 parts per 100 parts total polymer of the lead salt. The polymer stock was mixed until the temperature of the stock reached 175 °C and was held at this temperature for 60 seconds. The mixed stock was discharged at 175-180 °C onto a two-roll mill whose roll temperature was maintained at about 125-150 °C. The composition was sheeted off and test samples were prepared.

No. 18 copper AWG Standard Wire was coated by extruding the polymer composition onto the wire to a 1.2mm thickness. Test samples were prepared according to ASTM D-470; tensile strength at break and elongation at break were determined according to ASTM 412; hot deformation was determined according to British Standard BS 6746. Results are shown in Table I.

Slabs of the composition were prepared having the dimensions 152 x 152 x 3.2mm. These slabs were tested for heat deformation according to ASTM D-648 and smoke generation according to ASTM E662. The results are shown in Table I.

| Ingredients | Parts by Weight |
|---|---|
| Ethylene Acrylate Copolymer | 65 |
| Polyethylene | 15 |
| Copolyetherester Elastomer | 20 |
| $Al(OH)_3$ | 150 |
| Dibasic Lead Phosphite | 5 |
| Naugard® 445 Antioxidant | 1 |
| Gafac RL-210 Acid Phosphate | 1 |
| Microcrystalline Wax | 1 |
| **Properties on No. 18 AWG Standard Wire** | |
| **Stress/Strain Properties** | |
| $T_B$ (MPa) | 10.8 |
| $E_B$ (%) | 225 |
| **10 Days Air Oven at 100°C** | |
| % of Original, $T_B$ | 144 |
| % of Original, $E_B$ | 74 |
| **48 Hours at 70°C in ASTM No. 2 Oil** | |
| % of Original, $T_B$ | 108 |
| % of Original, $E_B$ | 80 |
| **Hot Deformation** | |
| At 70°C (%) | 25 |
| At 80°C (%) | 30.8 |
| At 120°C (%) | 18.8 |
| **Properties of 152 x 152 x 3.2mm Slabs** | |
| **Heat Deformation at 121°C, 2kg Load** | |
| ASTM D-648 (%) | 12 |
| **Limiting Oxygen Index** | 37 |
| **Maximum Smoke Density (ASTM E-662)** | |
| Flaming Mode | 235 |
| Nonflaming Mode | 104 |

The above data show that the composition maintains good physical properties and dimensional stability at elevated temperatures and is exceptionally low smoke generating.

Example 2

A sample of 2100g aluminum hydroxide (1-2 microns) 70g dibasic lead phosphite, 28g stearic acid, 14g Gafac RL-210 (organic alkyl acid phosphate) and 14g Naugard® 445 antioxidant (substituted diphenyl amine) were mixed and added to a water-cooled Banbury mixer followed by addition of 840g of an ethylene acrylate copolymer (containing 40 weight percent ethylene units, 56 weight percent methyl acrylate units and 4 weight percent ethyl hydrogen maleate units), 420g of a linear high density polyethylene (density 0.96, melt index 2.8), and 140g of an ethylene vinyl acetate copolymer (containing 12 weight percent vinyl acetate units, density 0.935, melt index 0.3). The resulting thermoplastic composition contained, based on the total weight of the polymer in the composition, 60 weight percent ethylene acrylate copolymer, 30 weight percent polyethylene, 10 weight percent ethylene vinyl acetate copolymer, 150 parts per 100 parts total polymer aluminum hydroxide, 5 parts per 100 parts total polymer lead salt.

The polymer stock was mixed until the temperature of the stock reached 175 °C and was held at this temperature for 60 seconds. The mixed stock was discharged at 175-180 °C onto a two-roll mill whose roll temperature was maintained at about 125-150 °C. The composition was sheeted off and test samples were prepared.

Table II

| Ingredients | Parts by Weight |
| --- | --- |
| Ethylene Acrylate Copolymer | 60 |
| Ethylene Vinyl Acetate Copolymer | 10 |
| Polyethylene | 30 |
| $Al(OH)_3$ | 150 |
| Stearic Acid | 2 |
| Dibasic Lead Phosphite | 5 |
| Naugard® 445 Antioxidant | 1 |
| Gafac RL-210 Acid Phosphate | 1 |
| Properties on No. 10 AWG Standard Wire | |
| Stress/Strain Properties | |
| $T_B$ (MPa) | 10.35 |
| $E_B$ (%) | 165 |
| 10 Days Air Oven at 100°C | |
| % of Original, $T_B$ | 126 |
| % of Original, $E_B$ | 73 |
| 48 Hours at 70°C in ASTM No. 2 Oil | |
| % of Original, $T_B$ | 130 |
| % of Original, $E_B$ | 73 |
| Hot Deformation | |
| At 70°C (%) | 16.7 |
| At 80°C (%) | 25 |
| At 120°C (%) | 19.2 |
| Properties of 152 x 152 x 3.2mm Slabs | |
| Heat Deformation at 121°C, 2kg Load | |
| ASTM D-648 (%) | 6.2 |
| Limiting Oxygen Index | 32 |
| Maximum Smoke Density (ASTM E662) | |
| Flaming Mode | 277 |
| Nonflaming Mode | 126 |

The above results show that the composition maintains good physical properties and dimensional stability at high temperatures and is exceptionally low smoke generating.

**Claims**

1. A halogen-free flame retardant, low smoke generating thermoplastic composition comprising:
(a) 50-70 weight percent of an ethylene acrylate copolymer which contains 30-60 weight percent ethylene,
(b) 10-30 weight percent of a linear polymer of ethylene or propylene,
(c) 5-25 weight percent of a polymer having a melting point not greater than 180 °C selected from the group consisting of a multi-block copolyetherester elastomer, or an ethylene vinyl ester copolymer of a monocarboxylic alkanoic acid containing 2-4 carbon atoms, said copolymer containing 10-30 weight percent vinyl ester or mixtures thereof, and
(d) 100-175 parts per 100 parts total polymer of a hydrated inorganic metal salt flame retardant.

2. The composition of Claim 1 where said polymer is an ethylene vinyl ester copolymer of a monocarboxylic alkanoic acid containing 2-4 carbon atoms, said copolymer containing 10-30 weight percent vinyl ester.

3. A composition of Claim 1 wherein the ethylene vinyl ester copolymer is ethylene vinyl acetate.

4. A composition of Claim 1 where said polymer is a multi-block copolyetherester elastomer.

5. A composition of Claim 4 where the multi-block copolyetherester elastomer contains poly(butylene terephthalate) short-chain ester units, the balance being long-chain ester units of poly(tetramethylene ether) glycol terephthalate.

6. A composition of Claims 4 or 5 which contains 100-175 parts per 100 parts total polymer of a lead salt.

7. A composition of Claim 1 where the ethylene acrylate copolymer is ethylene methyl acrylate.

8. A composition of Claim 1 where the ethylene acrylate copolymer is ethylene methyl acrylate containing a third monomer of a monoalkyl ester of 1,4-butenedioc acid.

9. A composition of Claim 1 wherein the polyolefin is polyethylene.

10. A composition of Claim 1 where the polyolefin is high density polyethylene.

11. A composition of Claim 1 where the flame retardant is aluminum hydroxide.

12. A halogen-free flame retardant, low smoke generating composition comprising:
(a) 50-70 weight percent of an ethylene methyl acrylate copolymer which contains 30-60 weight percent ethylene,
(b) 10-30 weight percent of linear polyethylene,
(c) 5-25 weight percent of a polymer having a melting point not greater than 180 °C selected from the group consisting of a multi-block copolyetherester elastomer or an ethylene vinyl acetate copolymer containing 10-30 weight percent vinyl acetate or mixtures thereof, and
(d) 100-175 parts per 100 parts total polymer of aluminum hydroxide.

## Revendications

1. Une composition thermoplastique ignifuge, dégageant peu de fumée et exempte d'halogène, comprenant:
(a) 50 à 70% en poids d'un copolymère éthylène/acrylate qui contient 30 à 60% en poids d'éthylène,
(b) 10 à 30% en poids d'un polymère linéaire d'éthylène ou de propylène,
(c) 5 à 25% en poids d'un polymère ayant un point de fusion ne dépassant pas environ 180 °C, choisi dans le groupe compenant un élastomère de copolyétherester multibloc, au un copolymère éthylène/ester vinylique d'un acide alcanoïque monocarboxylique contenant 2 à 4 atomes de carbone, ce copolymère contenant 10 à 30% en poids d'ester vinylique, ou leurs mélanges, et
(d) 100 à 175 parties pour 100 parties du polymère total, d'un agent retardateur de flamme de type sel métallique inorganique hydraté.

2. Une composition suivant la revendication 1, dans laquelle ce polymère est un copolymère éthylène/ester vinylique d'un acide alcanoïque monocarboxylique contenant 2 à 4 atomes de carbone, ce copolymère contenant 10 à 30% en poids d'ester vinylique.

3. Une composition suivant la revendication 1, dans laquelle le copolymère éthylène/ester vinylique est un copolymère éthylène/acétate de vinyle.

4. Une composition suivant la revendication 1, dans laquelle ce polymère est un élastomère de copolyétherester multibloc.

5. Une composition suivant la revendication 4, dans laquelle l'élastomère de copolyétherester multibloc contient des unités esters à chaîne courte de poly(téréphtalate de butylène), le restant étant constitué par des unités ester à longue chaîne de téréphtalate de poly(tétraméthylène éther) glycol.

6. Une composition suivant la revendication 4 ou la revendication 5, qui contient 100 à 175 parties d'un sel de plomb pour 100 parties de polymère total.

7. Une composition suivant la revendication 1, dans laquelle le copolymère éthylène/acrylate est un copolymère éthylène/acrylate de méthyle.

8. Une composition suivant la revendication 1, dans laquelle le copolymère éthylène/acrylate est un copolymère éthylène/acrylate de méthyle contenant un troisième monomère d'un ester monoalkylique d'acide 1,4-butènedioïque.

9. Une composition suivant la revendication 1, dans laquelle la polyoléfine est un polyéthylène.

10. Une composition suivant la revendication 1, dans laquelle la polyoléfine est un polyéthylène haute densité.

11. Une composition suivant la revendication 1, dans laquelle l'agent retardateur de flamme est l'hydroxyde d'aluminium.

12. Une composition ignifuge dégageant peu de fumée et exempte d'halogène, comprenant:
(a) 50 à 70% en poids d'un copolymère éthylène/acrylate de méthyle qui contient 30 à 60% en poids d'éthylène,
(b) 10 à 30% en poids d'un polyéthylène linéaire,
(c) 5 à 25% en poids d'un polymère ayant un point de fusion ne dépassant pas environ 180°C choisi dans le groupe comprenant un élastomère de copolyétherester multibloc ou un copolymère éthylène/acétate de vinyle contenant 10 à 30% en poids d'acétate de vinyle, ou leurs mélanges, et
(d) 100 à 175 parties d'hydroxyde d'aluminium pour 100 parties du polymère total.

## Ansprüche

1. Halogenfreie, flammhemmende, schwach raucherzeugende thermoplastische Zusammensetzung, umfassend
(a) 50 bis 70 Gew.-% eines Ethylenacrylat-Copolymers, das 30 bis 60 Gew.-% Ethylen enthält,
(b) 10 bis 30 Gew.-% eines linearen Polymers aus Ethylen oder Propylen,
(c) 5 bis 25 Gew.-% eines Polymers mit einem Schmelzpunkt nicht höher als 180°C, ausgewählt aus der aus einem Multi-Block-Copolyetherester-Elastomer oder einem Ethylen-Vinylester-Copolymer einer Alkanmonocarbonsäure mit 2 bis 4 Kohlenstoff-Atomen, wobei das Copolymer 10 bis 30 Gew.-% Vinylester enthält, oder deren Mischungen bestehenden Gruppe, und
(d) 100 bis 175 Teile, bezogen auf 100 Teile Polymer insgesamt, eines hydratisierten anorganischen Metallsalz-Flammverzögerungsmittels.

2. Zusammensetzung nach Anspruch 1, worin das Polymer ein Ethylen-Vinylester-Copolymer einer Alkanmonocarbonsäure mit 2 bis 4 Kohlenstoff-Atomen ist, wobei das Copolymer 10 bis 30 Gew.-% Vinylester enthält.

3. Zusammensetzung nach Anspruch 1, worin das Ethylen-Vinylester-Copolymer Ethylen-Vinylacetat ist.

4. Zusammensetzung nach Anspruch 1, worin das Polymer ein Multi-Block-Copolyetherester-Elastomer ist.

5. Zusammensetzung nach Anspruch 4, worin das Multi-Block-Copolyetherester-Elastomer kurzkettige Ester-Einheiten aus Poly(butylenterephthalat) enthält, wobei der Rest langkettige Ester-Einheiten aus Poly(tetramethylenether)glycolterephthalat) besteht.

6. Zusammensetzung nach den Ansprüchen 4 oder 5, enthaltend 100 bis 175 Teile, bezogen auf 100 Teile Polymer insgesamt, eines Blei-Salzes.

7. Zusammensetzung nach Anspruch 1, worin das Ethylenacrylat-Copolymer Ethylenmethylacrylat ist.

8. Zusammensetzung nach Anspruch 1, worin das Ethylenacrylat-Copolymer Ethylenmethylacrylat ist, das ein drittes Monomer eines Monoalkylesters der 1,4-Butendisäure ist.

9. Zusammensetzung nach Anspruch 1, worin das Polyolefin Polyethylen ist.

10. Zusammensetzung nach Anspruch 1, worin das Polyolefin Polyethylen hoher Dichte ist.

11. Zusammensetzung nach Anspruch 1, worin das Flammverzögerungsmittel Aluminiumhydroxid ist.

12. Halogenfreie, flammhemmende, schwach raucherzeugende Zusammensetzung, umfassend
    (a) 50 bis 70 Gew.-% eines Ethylenmethylacrylat-Copolymers, das 30 bis 60 Gew.-% Ethylen enthält,
    (b) 10 bis 30 Gew.-% eines linearen Polyethylens,
    (c) 5 bis 25 Gew.-% eines Polymers mit einem Schmelzpunkt nicht höher als 180° C, ausgewählt aus der aus einem Multi-Block-Copolyetherester-Elastomer oder einem Ethylen-Vinylacetat-Copolymer, das 10 bis 30 Gew.-% Vinylacetat enthält, oder deren Mischungen bestehenden Gruppe, und
    (d) 100 bis 175 Teile Aluminiumhydroxid, bezogen auf 100 Teile Polymer insgesamt.